# EUROPÄISCHE PATENTSCHRIFT

(11) **EP 1 428 928 B1**
(45) Veröffentlichungstag und Bekanntmachung des Hinweises auf die Patenterteilung: **20.12.2006**
(21) Anmeldenummer: 03023376.1
(22) Anmeldetag: 16.10.2003
(51) Int. Cl.: D21B 1/34

(54) **Vorrichtung zum Zerkleinern von Material und Zerkleinerungs-Werkzeug für eine solche Vorrichtung**
Apparatus for grinding material and grinding element for such an apparatus
Dispositif pour le broyage de matériaux et élément de broyage pour un tel dispositif

(30) Priorität: 16.10.2002 DE 10248260
(43) Veröffentlichungstag der Anmeldung: 16.06.2004
(73) Patentinhaber: ASK high technology Technische Entwicklungen GmbH & Co. Betrieb KG, 95326 Kulmbach (DE)
(72) Erfinder: Schneider, Florian, 95326 Kulmbach (DE)
(74) Vertreter: Borchert, Uwe Rudolf

(56) Entgegenhaltungen:
- DE-A- 10 016 560
- DE-A- 19 649 764
- DE-A- 19 850 204
- US-A- 3 314 617
- US-A1- 2002 060 025

## Beschreibung

Die Erfindung betrifft eine Vorrichtung zum Zerkleinern von Material gemäß der im Oberbegriff des Anspruches 1 angegebenen Art und ein Zerkleinerungs-Werkzeug für eine solche Vorrichtung.

Eine derartige Vorrichtung und ein derartiges Zerkleinerungs-Werkzeug sind in der DE 196 49 764 C2 beschrieben. Bei dieser bekannten Vorrichtung sind in einem Zerkleinerungsbehälter ein Sieb in horizontaler Anordnung stationär und darüber ein mehrarmiger Rotor angeordnet, der um eine etwa mittige und in Bezug zum Sieb vertikal verlaufende Drehachse drehbar gelagert ist. Der Rotor ist über einen Antrieb drehbar. Auf den einander zugewandten Zerkleinerungsseiten, d. h. an der Oberseite des Siebes und an der Unterseite des Rotors, sind jeweils Zerkleinerungs-Werkzeuge angeordnet, die miteinander zusammenwirken und im Betrieb das Material zerkleinern. Die Werkzeuge des Siebes werden durch Sieblöcher gebildet. Zusätzlich kann das Sieb auch Zerkleinerungs-Werkzeuge einer anderen Art aufweisen, z. B. sich etwa horizontal und radial erstreckende Leisten mit dem Rotor zugewandten und dessen Drehrichtung abgewandten Schneidkanten. Die Werkzeuge des Rotors werden durch Hartmaterialelemente gebildet, die an den Rotorarmen in deren dem Sieb und der Drehrichtung zugewandten Bereichen angeordnet sind und Schneidkanten an den Rotorarmen bilden. Die Schneidekanten bewirken ein Zerkleinern des Materials, in dem durch die Kante eine Turbulenz erzeugt wird, wodurch es zu einer Zerfaserung und somit Auflösung des zu zerkleinernden Materials kommt. Gemäß Fig. 13 dieser Druckschrift ist die gesamte der Drehrichtung zugewandte Seite des Rotorarmes mit diese Seite überdeckenden, im Querschnitt U-förmigen Hartmaterialelementen versehen, die einen T-förmigen Steg eines T-förmigen Tragteils übergreifen. Der Mittelsteg des Tragteils erstreckt sich hierbei quer zur Rotorachse durch einen Schlitz in den Rotorarm hinein und ist im Inneren des Rotorarmes durch einen Bolzen verstiftet. Zusätzlich zu den durch die Sieböffnungen gebildeten Zerkleinerungs-Werkzeugen können von der Siebfläche abstehende Zerkleinerungs-Werkzeuge in Form von Schneid- oder Störleisten vorgesehen sein, die ebenfalls mit den Werkzeugen des Rotors zusammenwirken. Diese Leisten können in hinterschnittenen Nuten im Sieb formschlüssig gehalten sein.

Bei der bekannten Vorrichtung ist die Ausgestaltung und Befestigung der Hartmaterialelemente zwar funktionsfähig, jedoch vielgliedrig. Zudem sind die Hartmaterialelemente von komplexer Bauform. Außerdem besteht die Gefahr, dass die Befestigung sich im Funktionsbetrieb lockert. Soweit das Sieb betroffen ist, ist mit einem relativ schnellen Abfall der Leistungsfähigkeit zu rechnen, wodurch auch ein erhöhter Energieverbrauch und ein Abfall der Zerkleinerungsqualität einhergeht. Letzteres gilt auch für die Verschleißteile des Rotors.

Unter einem Hartmaterial wird in dieser Anmeldung eine Keramik, ein Hartmetall, wie Wolframkarbid oder ein ähnlicher Sinterwerkstoff verstanden. Diese Werkstoffe zeichnen sich dadurch aus, dass sie hochfest und somit verschleißfest, jedoch schwer zu bearbeiten sind.

Aus der DE 100 16 560 A1 ist ebenfalls ein Rotor als Teil einer Vorrichtung zum Zerkleinern von Material bekannt. Dieser Rotor weist ein Tragteil auf, das mit dem Rotorarm verschweißt ist. Das Tragteil ist mit einer verschleißgeschützten Oberfläche aus Edelstahl versehen. Bei einer Abnutzung dieser Oberfläche muss der ganze Rotor ausgetauscht werden. Zwar ist in der Druckschrift von einem Auftrennen der Schweißnaht die Rede, jedoch hat sich gezeigt, dass dabei die Anlagenflächen beschädigt werden und somit ein Aufbereiten des Rotors nicht mehr möglich ist. Zudem hat diese Ausführung den Nachteil, dass auf der die verschleißfeste Oberfläche aufweisenden Seite des Tragteils es zu Abnutzungserscheinungen aufgrund von Strömungen kommt.

Aus der DE 295 00 498.3 U1 ist ein Rotor bekannt, der Messer aufweist. Hiermit wird das Material zerschnitten und nicht durch Zusammenwirken von Sieb, Schneidkante und Strömung aufgetrennt, wie dies beim gattungsbildenden Stand der Technik der Fall ist. Zudem ist diese Konstruktion ungünstig, da bei einem evtl. notwendigen Vergrößern des verschleißfesten Materials, insbesondere an der Stirnseite, die Festigkeit des Messerarms nicht mehr gewährleistet ist.

Der Erfindung liegt die Aufgabe zugrunde, eine Vorrichtung zum Zerkleinern von Material gemäß der im Oberbegriff des Anspruches 1 angegebenen Art sowie ein Zerkleinerungs-Werkzeug für eine solche Vorrichtung derart weiterzubilden, dass unter Vermeidung der genannten Nachteile ein einfaches Auswechseln der Verschleißteile ermöglicht und eine einfache, kompakte und stabile Bauweise mit hoher Lebensdauer erreicht wird.

Diese Aufgabe wird durch die kennzeichnenden Merkmale des Anspruches 1 in Verbindung mit seinen Oberbegriffsmerkmalen gelöst. Für das Zerkleinerungswerkzeug wird die Aufgabe durch die Merkmale des Anspruches 16 gelöst.

Die Unteransprüche bilden vorteilhafte Weiterbildungen der Erfindung.

Der Erfindung liegt die Erkenntnis zugrunde, dass eine verschleißfestere Bauweise dann erreichbar ist, wenn sowohl die der Drehrichtung zugewandten als auch die dem Sieb zugewandten Hartmaterialelemente am Tragteil befestigt sind und dieses Tragteil einfach ausgewechselt werden kann. Hierdurch lässt sich die durch die Strömung bedingte Materialabnutzung am Tragteil reduzieren und die Montage und Instandsetzung erheblich vereinfachen.

Nach der Erfindung weist deshalb das Tragteil überwiegend eine rechteckförmige Querschnittsform auf und die Hartmaterialelemente sind sowohl auf der der Drehrichtung zugewandten Seite als auch auf der dem Sieb zugewandeten Seite materialschlüssig mit dem Tragteil verbunden, wobei zumindest ein Hartmaterialelement auf jeder der der Schneidkante nächstgelegenen Seiten des Tragteils angeordnet ist. Hierdurch kann die Fläche, die mit Hartmaterial bedeckt ist, einfach den Erfordernissen angepasst werden, insbesondere den durch Strömung bedingten Belastungen.

Gemäß einer Ausführungsform der Erfindung sind auf der der Drehrichtung zugewandten Seite in Richtung von der Schneidkante weg und auf der dem Sieb zugewandten Seite in Richtung parallel zur Schneidkante mehrere Hartmaterialelemente, insbesondere unmittelbar nebeneinander, angeordnet. Hierdurch wird eine verschleißgerechte Anordnung der Hartmaterialelemente für unterschiedliche Rotorformen auf einfache Weise erreicht. Gleiches gilt auch dafür, wenn auf der dem Sieb zugewandten Seite mehrere Hartmaterialelemente in Richtung von der Schneidkante weg, insbesondere unmittelbar nebeneinander, angeordnet sind.

Es trägt zur weiteren Vereinfachung der Bauweise bei, wenn auf beiden Seiten des Tragteils gleiche Hartmaterialelemente aufgebracht werden. Hierfür eignen sich Hartmaterialelemente, die quaderförmig in Plattenform ausgebildet sind. Bei einer Befestigung durch Löten oder Kleben können nicht nur die Anlageflächen des Tragteils, sondern auch die gegenseitigen Anlageflächen der Hartmaterialelemente als Befestigungsflächen genutzt werden, wodurch sich große Befestigungsflächen und somit auch eine stabile Befestigung für die Hartmaterialelemente ergeben.

Die Hartmaterialelemente können dazu dienen, nicht nur die Schneidkante zu bilden, sondern auch die benachbarten Bereiche des Tragteils verschleißfest abzudecken, um insbesondere den Rotorarm vor Belastungen durch Strömungsabtrag zu schützen. Dabei lassen sich vorteilhafte Flächenabdeckungen insbesondere dann erreichen, wenn die Hartmaterialelemente eine Länge aufweisen, die größer ist als deren Breite, vorzugsweise doppelt so groß wie die Breite.

Insbesondere erstrecken sich die Hartmaterialelemente zumindest von einer Kante des Trageteils zur entfernt gelegenen Kante.

Des Weiteren kann das Tragteil prismatisch aufgebaut sein, d. h. es weist entlang seiner Längsachse jeweils die gleiche Querschnittsfläche und Querschnittsform auf.

Um die Gefahr von Spannungsrissen in den Löt- oder Klebeflächen bei den im Betrieb auftretenden Belastungen zu verringern, ist es vorteilhaft, die Hartmaterialelemente im Bereich der Schneidkante längs der Schneidkante anzuordnen. Hierbei ist es vorteilhaft, wenn die der Drehrichtung zugewandten Hartmaterialelemente die dem Sieb zugewandten Hartmaterialelemente überlappen, wobei letztere eine Stützfunktion ausüben.

Die Schnittwirkung kann verbessert und vergleichmäßigt werden, wenn in den inneren und den äußeren Bereichen der Schneidkanten gleichmäßige oder vergleichmäßigte Schnittbedingungen vorliegen.

Bei der Ausgestaltung nach Anspruch 11 sind die Rotorarme entgegen der Drehrichtung gekrümmt, wobei die Schneidkanten durch sich gerade erstreckende Werkzeugkörper, also die Baueinheit aus Tragteil mit Hartmetallelementen, gebildet sind. Deren einander zugewandte Stirnflächen sind stumpfwinklig ausgebildet, sodass die sich gerade erstreckenden Werkzeugkörper der Krümmung folgen können. Hierdurch ergeben sich Schneidkanten, die sich aus stumpfwinklig aneinander anschließenden Schneidkantenabschnitten bilden. Eine gleichmäßigere Schnittbelastung während der Drehung des Rotors ergibt sich hierdurch.

Es lässt sich eine kleine, einfache und stabile Bauweise erreichen, wenn die Werkzeugkörper in einer rechteckförmigen Aufnahmenut sitzen, die in die Drehrichtung und zum Sieb hin offen ist.

Zur Befestigung des Tragteils und somit des ganzen Werkzeugkörpers kann eine Verschraubung vorgesehen sein, die von hinten eingreift. Die stumpfwinklige Ausbildung der Stirnflächen der Werkzeugkörper ermöglicht eine gegenseitige Anlage an den einander zugewandten Enden, was zur Stabilisierung der Befestigung der Werkzeugkörper beiträgt.

Im Betrieb der Vorrichtung treten im Schnittbereich der Zerkleinerungs-Werkzeuge beträchtliche Schnittkräfte auf. Es wird deshalb angestrebt, durch geneigte Schnittkanten die Belastungen der Werkzeuge zu verringern.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen. Es zeigen:
- Fig. 1: eine Draufsicht einer erfindungsgemäßen Vorrichtung zum Zerkleinern von Material in vereinfachter Darstellung mit einem Rotor und einem Sieb;
- Fig. 2: eine Teilschnittansicht entlang der Linie II-II in Fig. 1;
- Fig. 3: eine Draufsicht auf das Sieb im Bereich des Teilschnittes gemäß Fig. 2;
- Fig. 4: eine Teileschnittansicht entlang der Linie IV-IV in Fig. 1;
- Fig. 5: eine Unteransicht eines Rotors, z. B. nach Fig. 1;
- Fig. 6: eine Schnittansicht entlang der Linie VI-VI in Fig. 5 eines mit einem Zerkleinerungs-Werkzeug bestückten Rotorarms;
- Fig. 7: eine Unteransicht des Werkzeuges nach Fig 6;
- Fig. 8: eine Draufsicht auf einen Rotor in abgewandelter Ausgestaltung;
- Fig. 9: eine Draufsicht eines Längsabschnitts des Rotorarms nach Fig. 8;
- Fig. 10: eine Unteransicht eines Längsabschnitts des Rotorarms nach Fig. 8;
- Fig. 11: eine Schnittansicht nach Fig. 8 in abgewandelter Ausgestaltung;
- Fig. 12: eine Seitenansicht von rechts des Werkzeugs nach Fig. 11;
- Fig. 13: eine Draufsicht auf das Werkzeug nach Fig. 11;
- Fig. 14: eine Schnittansicht des Hartmaterialelementes mit Tragteil gemäß Fig. 8 in abgewandelter Ausgestaltung;
- Fig. 15: eine Seitenansicht von rechts der Hartmaterialelemente nach Fig. 14; und
- Fig. 16: eine Draufsicht auf die Hartmaterialelemente nach Fig. 14.

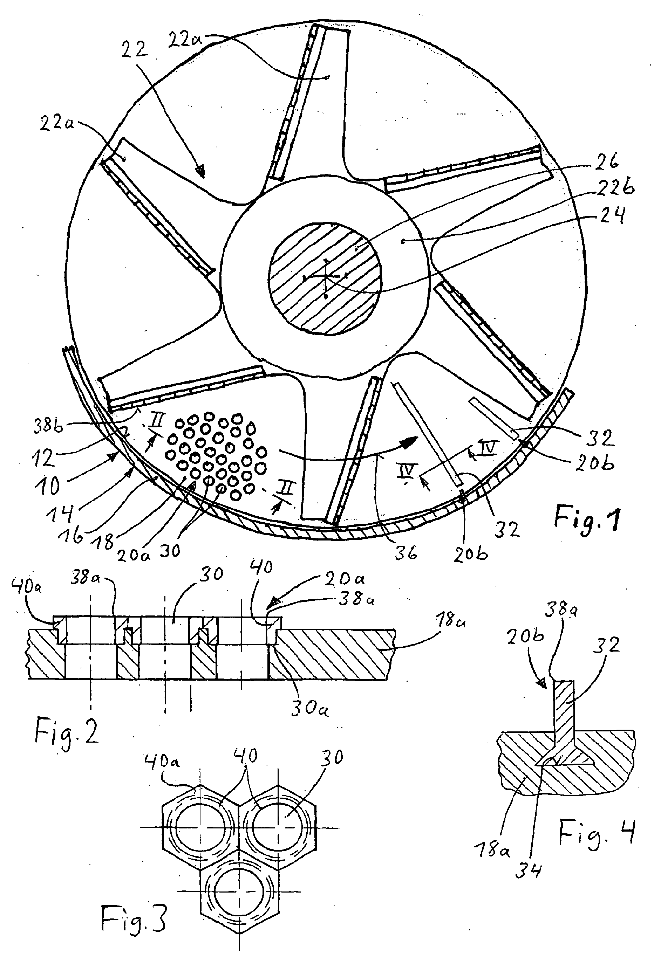

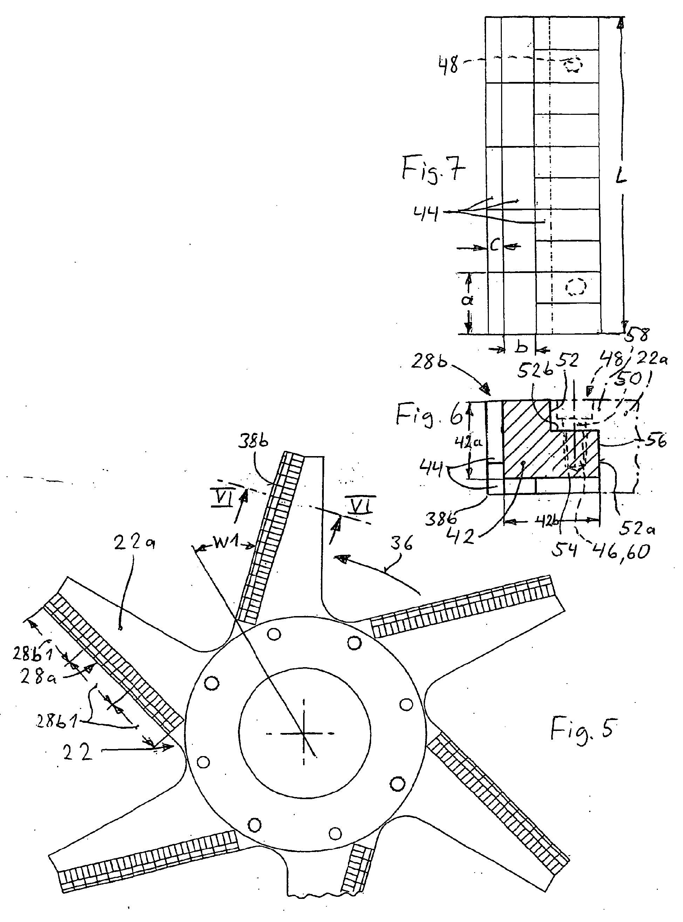

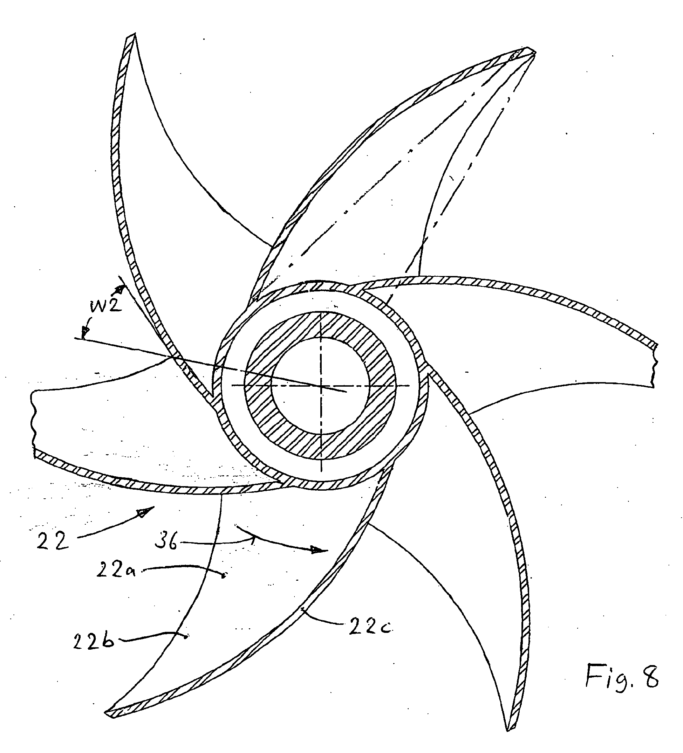

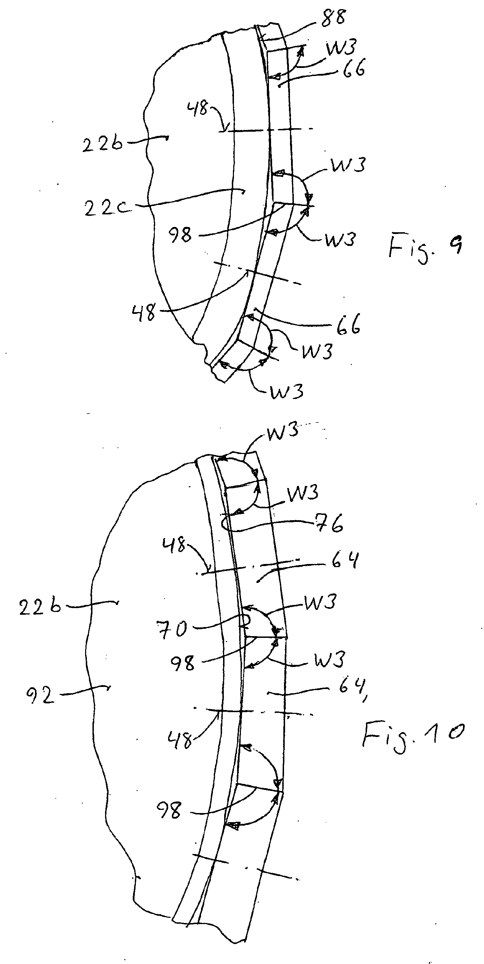

Die wesentlichen Teile der in Fig. 1 in ihrer Gesamtheit mit 10 bezeichneten Vorrichtung sowie deren Funktion sind aus der DE 39 25 098 C2 oder der DE 196 49 764 C2 zu entnehmen, worauf Bezug genommen wird. Deshalb wird im Folgenden die Vorrichtung 10 nur teilweise dargestellt und teilweise beschrieben.

Die Vorrichtung 10 weist in einem Aufnahmeraum 12 eines Zerkleinerungs-Behälters 14 mit im Schnitt kreisrunder Umfangswand 16 ein Sieb 18 in etwa horizontaler Anordnung in Bezug auf die Umfangswand 16 auf. Das Sieb 18 ist im Aufnahmeraum 12 ortsfest gehalten und weist an seiner Oberseite Zerkleinerungs-Werkzeuge 20a, 20b auf.

Über dem Sieb 18 ist ein Rotor 22 mit mehreren Rotorarmen 22a um eine vertikale Drehachse 24 drehbar gelagert und durch einen nicht dargestellten Antrieb, z. B. durch einen Elektromotor, antreibbar. Der Rotor 22 kann z. B. mit einer Nabe auf einer sich vertikal erstreckenden Welle 26 drehfest sitzen, die in nicht dargestellter Weise in Lagern gelagert und mit dem Antrieb in Antriebsverbindung steht.

Der Rotor 22 weist auf seiner dem Sieb 18 zugewandten Unterseite Zerkleinerungs-Werkzeuge 28a auf, die im Betrieb während der Rotation des Rotors 22 mit den Werkzeugen 20a, 20b des Siebes 18 zusammenwirken und das Material, beispielsweise Altpapier, zerkleinern.

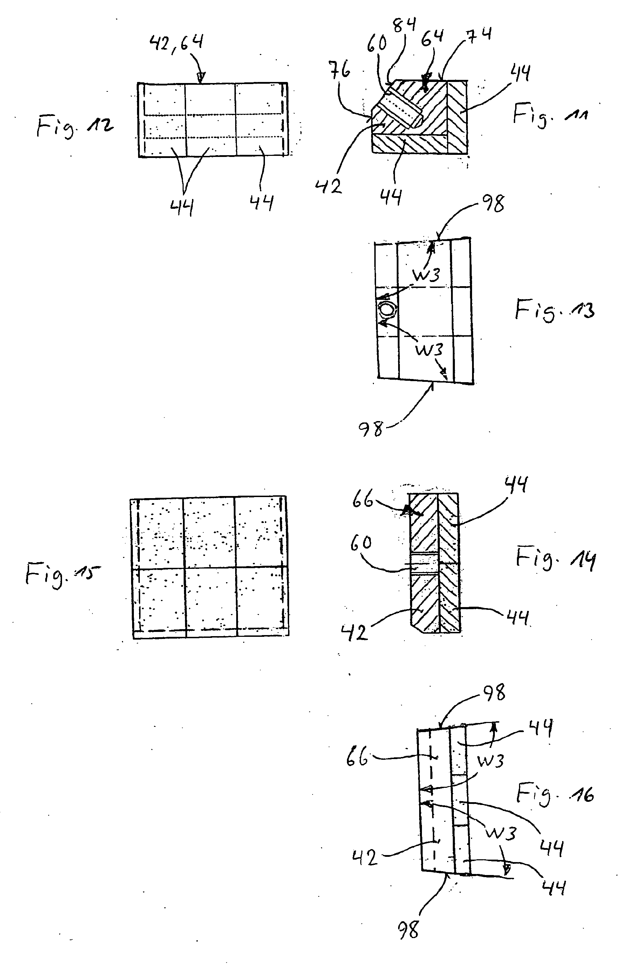

Eine erste Art von Werkzeugen 20a des Siebes 18 können durch die oberen Lochränder der das scheibenförmige Sieb 18 vertikal durchsetzenden Sieblöcher 30 gebildet sein. Zusätzlich kann das Sieb 18 eine zweite Art Werkzeuge 20b aufweisen, die von der im Wesentlichen horizontalen Oberseite des Siebkörpers nach oben abstehen und beim Ausführungsbeispiel durch sich etwa radial erstreckende so genannte Störleisten 32 viereckigen Querschnitts gebildet sind. Die Störleisten 32 sind am Siebkörper 18a lösbar befestigt, z. B. durch eine formschlüssige Verbindung mit einer sich etwa radial erstreckenden Aufnahmenut 34 (Fig. 4), in der das zugehörige Werkzeug 20b mit einem entsprechend in eine als Hinterschnitt ausgebildete Aufnahmenut 34 mit ihrem divergent geformten Werkzeugfuß aufgenommen ist.

Zur radialen Positionierung der sich über die gesamte oder nur einen Teil der radialen Abmessung des Siebes 18 erstreckenden Werkzeuge 20b ist eine Arretiervorrichtung vorgesehen, z. B. in Form einer Klemmschraube, die das jeweilige Werkzeug 20b radial arretiert (nicht dargestellt). Außerdem können die Werkzeuge 20b aus mehreren radial hintereinander liegend angeordneten Werkzeugabschnitten bestehen. Ausführungsbeispiele sowohl für die Befestigung der Werkzeuge 20b am Siebkörper als auch für die radiale Längsteilung sind in der DE 196 49 764 C2, Fig. 4 bis 8, und DE 39 25 098 C2, Fig. 1 bis 3, beschrieben, auf die Bezug genommen wird.

Die Werkzeuge 20a, 20b bilden mit ihren dem Rotor 22 zugewandten und dessen Drehrichtung 36 abgewandten Kanten stationäre Schneidkanten 38a, die bei den Werkzeugen 20b unmittelbar und bei den Werkzeugen 20a mittelbar mit an den Unterseiten der Rotorarme 22a angeordneten und somit dem Sieb 18 und der Drehrichtung 36 zugewandten bewegbaren Schneidkanten 38b zusammenwirken.

Im Betrieb unterliegen sowohl die Schneidkanten 38a, 38b als auch deren jeweils benachbarte Bereiche einem beträchtlichen Verschleiß, der durch das Material hervorgerufen wird, das mit einem beträchtlichen Schnittdruck in diesen Bereichen wirksam ist und zu Abnutzungen führt. Um die Standzeit der Schneidkanten 38a, 38b zu vergrößern, sind die verschleißgefährdeten Bereiche des Siebes 18 und der Rotorarme 22a mit Hartmaterialelementen besetzt. Die Hartmaterialelemente 44 bilden die Schneidkanten 38a, 38b und sind am Rotor 22 lösbar und austauschbar befestigt.

Bei dem bekannten Sieb 18 ergibt sich das Problem einer Abnutzung im Eingangsbereich der Sieblöcher 30. Es kommt zu einem Verschleiß dergestalt, dass die im Schnitt eckigen Sieblochkanten verrunden. Hierdurch können dann größere Faserpartikel des Materials das Sieb 18 passieren, die Sieblöcher 30 verstopfen und die Zerkleinerungs- bzw. Zerfaserleistung der Vorrichtung 10 vermindern.

Beim Ausführungsbeispiel nach Fig. 2 sind die Eingangsbereiche der Sieblöcher 30 durch darin fest eingesetzte Hülsen 40 aus Hartmaterial stabilisiert. Die Hülsen 40 sind materialschlüssig mit den Wandungen der Sieblöcher 30 verbunden, z. B. durch Löten oder Kleben. Vorzugsweise weisen die Sieblöcher 30 in ihren Eingangsbereichen zylindrische Locherweiterungen 30a auf, in denen die entsprechend groß bemessenen Hülsen 40 sitzen und materialschlüssig befestigt sind. Hierdurch können die vorzugsweise runden Hülsen 40 bezüglich ihren Querschnittsabmessungen größer bemessen werden, so dass sie innen den Querschnittsabmessungen der Sieblöcher 30 in ihrem unteren Bereich entsprechen oder nur geringfügig nach innen vorspringen. Durch die Locherweiterungen 30a werden außerdem in den Sieblöchern 30 Stufen gebildet, an denen die Hülsen 40 gegen ein weiteres Einschieben formschlüssig axial nach unten begrenzt sind.

Anstelle von durch Locherweiterungen 30a gebildeten Stufen können die Hülsen 40 jeweils durch einen an ihrem oberen Ende angeordneten Flansch 40a gegen ein weiteres axiales Einschieben formschlüssig gesichert sein, der auf der Oberseite des Siebes 18 aufliegt. Es kann auch jeweils eine Locherweiterung 30a und ein Flansch 40a vorgesehen sein, wie es beim Ausführungsbeispiel der Fall ist. Beim Vorhandensein von Hülsen 40 werden die Schneidkanten 38a durch die Lochränder der Hülsen 40 gebildet.

Es ist besonders vorteilhaft, die Flansche 40a mit einer sechseckigen Form und einer solchen Größe auszubilden, dass einander benachbarte Hülsen 40 an den ebenen Umfangsflächen der Flansche 40a aneinander anliegen oder nur ein geringes Bewegungsspiel zwischen sich aufweisen. Hierdurch wird eine durch die Oberflächen der Flansche 40a gebildete geschlossene Oberfläche des Siebes 18 erreicht. Das Vorhandensein der Flansche 40a führt außerdem zu einer größeren Festigkeit der materialschlüssigen Verbindung, da diese auch zwischen den Flanschen 40a und der Oberfläche des Siebkörpers 18a wirksam oder beim Vorhandensein von sechseckigen Flanschen 40a auch zwischen den ebenen Umfangsflächen der Flansche 40a vorhanden sein kann. Hierdurch wird die Stabilität und Belastbarkeit der materialschlüssigen Verbindung wesentlich vergrößert.

Beim Ausführungsbeispiel nach Fig. 5 bis 7, bei dem gleiche oder vergleichbare Teile mit gleichen Bezugszeichen versehen sind, sind die Werkzeuge 28b an den Rotorarmen 22a jeweils durch ein Tragteil 42 und daran materialschlüssig befestigten Hartmaterialelementen 44 gebildet, die die zugehörige Schneidkante 38b bilden, wobei das Tragteil 42 ein Befestigungselement zum lösbaren Befestigen am zugehörigen Rotorarm 22a aufweisen kann. Das Befestigungselement 46 kann wenigstens ein Schraubenloch sein, in das eine Kopfschraube 48 eingeschraubt ist, die den zugehörigen Rotorarm 22a von der dem Sieb 18 abgewandten Seite her in einem Durchgangsloch 50 durchsetzt und deren Kopf vorzugsweise im Rotorarm 22a in eine Locherweiterung versenkt ist, um ihn im Funktionsbetrieb einer Verschleißbeanspruchung zu entziehen.

Um eine einfache und stabile Bauform für das Tragteil 42 zu erhalten, weist es eine im Wesentlichen rechteckige Querschnittsform mit zwei im Wesentlichen rechtwinklig zueinander angeordneten Anlageflächen 52a, 52b auf .

Das Tragteil 42 ist an seiner in die Drehrichtung 36 weisenden Vorderseite 42a und an seiner Unterseite 42b mit Verschleißteile bildenden quaderförmigen Platten besetzt, die die Hartmaterialelemente 44 bilden. Rückseitig ist das Hartmaterialelement 44 an der in die Drehrichtung 36 gerichteten Seite des zugehörigen Tragarms 22a angesetzt. Das Tragteil 42 weist eine rückseitig und oberseitig offene Aufnahmenut 52 rechteckiger Querschnittsform auf, wodurch ein rückseitig angeordneter Anlagesteg 54 ebenfalls rechteckigen Querschnitts gebildet ist.

Der Rotorarm 22a ist an seiner in die Drehrichtung 36 gerichteten Seite mit einer unterseitig offenen Aufnahmenut 56 versehen, die von einem in die Drehrichtung 36 abstehenden Stützsteg 58 übergriffen ist. In der rückseitig an die in die Drehrichtung 36 gerichteten Seite des Rotorarms 22a angesetzten Position sitzt das Tragteil 42 mit seinem Anlagesteg 54 am Stützsteg 58, wobei es rückseitig am Rotorarm 22a abgestützt ist. Die Kopfschraube 48 durchfasst den Stützsteg 58 im Durchgangsloch 50. Sie ist in ein Gewindeloch 60 im Anlagesteg 54 eingeschraubt, wobei ihr Schraubenkopf in eine Locherweiterung im Stützsteg 58 versenkt ist. Die Höhe H des Rotorarms 22a ist gleich oder kleiner als die Höhe h des Tragteils 42 und die Dicke d der unterseitigen Hartmaterialelemente 44. Diese schließen mit der Rückseite des Tragteils 42 ab, und sie sind somit an der Vorderseite des Rotorsarms 22a abgestützt, wodurch die Stabilität des Werkzeugs 28b vergrößert wird.

Die Schneidkante 38b des Werkzeugs 28b wird durch die Hartmaterialelemente 44 gebildet, die im Bereich der Schneidkantenecke angeordnet sind. Beim Ausführungsbeispiel übergreifen die an der Vorderseite angeordneten Hartmaterialelemente 44 die an der Unterseite angeordneten Hartmaterialelemente 44, so dass Erstere die Schneidkante 38b bilden. Vorzugsweise sind die Hartmaterialelemente 44 an der Vorderseite und an der Unterseite jeweils in zwei sich in der Längsrichtung der Rotorarme 22a erstreckenden Reihen unmittelbar nebeneinander angeordnet. Dabei sind die Hartmaterialelemente 44 als insbesondere quaderförmige Verschleißplatten ausgeführt, deren Länge a größer ist als deren Breite b, wobei diese größer ist als deren Dicke c. Das Verhältnis der Abmessungen c zu b zu a beträgt vorzugsweise etwa 1 : 2 : 4. In den der Schneidkante 38b benachbarten Reihen sind die Hartmaterialelemente 44 vorzugsweise längs dem Rotorarm 22a angeordnet. Hierdurch ergibt sich eine stabile Befestigung in dem Bereich, in dem der größte Schnittdruck entsteht. In den beiden von der Schneidkante 38b beabstandeten Reihen sind die Hartmaterialelemente 44 vorzugsweise quer angeordnet.

Oberseitig und/oder unterseitig schließen die Hartmaterialelemente 44 mit dem Tragteil 42 und vorzugsweise auch mit dem Rotorarm 22a in einer Höhe ab.

Das Tragteil 42 besteht aus hochfestem Material, z. B. aus legiertem Stahl. Die Hartmaterialelemente 44 bestehen aus einem hochverschleißfesten Hartmaterial, z. B. aus Hartmetall oder Hartkeramik. Bei beiden Ausführungen können die Hartmaterialelemente 44 durch Löten oder Kleben mit dem Tragteil 42 verbunden sein.

Das Werkzeug 28b lässt sich komplett vorfertigen. Hierbei ist eine raumsparende und rationelle Vorfertigung möglich, und es bedarf auch nur eines verhältnismäßig kleinen Ofens, da nicht der verhältnismäßig große Rotor 22, sondern nur die mit den Hartmaterialelementen 44 bestückten Tragteile 42 zu erwärmen sind.

Die sich längs der Schneidkante 38b erstreckende Länge des Werkzeugs 28b kann sich jeweils über die gesamte Länge des Rotorarms 22a erstrecken. Es ist vorteilhaft, das Werkzeug 28a quer zur Schneidkante 38b in mehrere, vorzugsweise gleich lange, Werkzeugabschnitte 28a1 zu unterteilen. Hierdurch werden Spannungen verringert, die unter anderem durch einen Verzug des Werkzeugs 28b entstehen können. Die Länge L der Werkzeugabschnitte 28a1 beträgt jeweils ein Mehrfaches, vorzugsweise das drei- bis siebenfache, insbesondere das fünffache, der Länge a der Hartmaterialelemente 44, so dass auch die Länge L bezüglich der Länge a diesem Verhältnis vorzugsweise entspricht.

Beim Ausführungsbeispiel nach Fig. 1 und 5 sind die Rotorarme 22a der Drehrichtung 36 entgegengesetzt geneigt angeordnet, wobei ihre geraden der Drehrichtung 36 zugewandten Vorderseiten mit einer das innere Ende der Vorderseite schneidenden Diametralebene einen spitzen Winkel W1 von etwa 40 bis 60° einschließen können.

Beim Ausführungsbeispiel nach Fig. 8, bei dem gleiche oder vergleichbare Teile mit gleichen Bezugszeichen versehen sind, ist sowohl die Ausgestaltung des Rotors 22 selbst als auch sein Besatz mit Hartmaterialelementen 44 in mehrerer Hinsicht unterschiedlich.

Die Rotorarme 22a können im Gegensatz zur etwa rechteckigen Querschnittsform gemäß Fig. 6 und 7 eine winkelförmige Querschnittsform aufweisen mit einem unteren horizontalen Armschenkel 22b und einem oberen vertikalen Armschenkel 22c, deren Scheitel im Bereich der Schneidkante 38b liegt.

Eine andere Variante des Rotors 22 besteht darin, dass die der Drehrichtung 36 zugewandte Vorderseite der Rotorarme 22a der Drehrichtung 36 entgegengesetzt gekrümmt ist. Im Gegensatz zum Ausführungsbeispiel nach Fig. 1 und 5, bei dem während der Rotation der Winkel W1 mit zunehmendem Abstand von der Drehachse abnimmt, lässt sich durch eine Krümmung eine verringerte Winkelabnahme oder ein im Wesentlichen konstanter Winkel W2 über die gesamte Länge der Schneidkante 38b erreichen. Da durch den Winkel W2 der Schneidkante unter anderem der Schnittdruck bestimmt ist, wird durch eine gekrümmte Ausgestaltung nach Fig. 8 ein ruhiger bzw. vergleichmäßigter Lauf des Rotors 22 erreicht.

Bei den Ausführungsbeispielen nach Fig. 9 bis 16 wird das Tragteil 42 mit dem Hartmaterialelementen 44 als Werkzeugkörper 64, 66 bezeichnet. Diese sind jeweils durch wenigstens eine Kopfschraube 48 von der dem Sieb 18 und/oder der Drehrichtung 36 abgewandten Seite her verschraubt und weisen jeweils eine im Wesentlichen etwa rechteckige Querschnittsform auf.

Der die Schneidkante 38b umfassende Werkzeugkörper 64 sitzt in einer Aufnahmenut 68 des Rotorarms 22b, die zum Sieb 18 und in die Drehrichtung 36 offen ist und durch eine horizontale und eine vertikale Stützfläche 70, 72 begrenzt ist, an denen der Werkzeugkörper 64 mit einer oberseitigen Anlagefläche 74 und einer rückseitigen Anlagefläche 76 anliegt und abgestützt ist. Beim Ausführungsbeispiel entspricht die Querschnittsform und - größe der Aufnahmenut 68 der Querschnittsform und - größe des Werkzeugkörpers 64, sodass seine Unterseite 78 und seine Vorderseite 80 mit der Unterseite und der Vorderseite des Tragarms 22a etwa abschließen, wobei er durch die Kopfschraube 48 in der Aufnahmenut 68 gehalten und gegen die Stützflächen 70, 72 abgestützt ist. Das Durchgangsloch 50 und das Gewindeloch 60 erstrecken sich schräg zur Schneidkante 38b hin geneigt. Hierdurch sind sie an die Winkelform des Rotorarms 22a angepasst, so dass das Durchgangsloch 50 sich vom Innenscheitel der Winkelform erstrecken kann. Außerdem ist die schräge Anordnung der Verschraubung deshalb vorteilhaft, weil sie eine Verspannung gegen beide Anlageflächen 74, 76 bewirkt.

Um zum einen das Einarbeiten des Gewindelochs 60 im Tragteil 42 des Werkzeugkörpers 64 zu vereinfachen und zum anderen den Rotorarm 22a möglichst wenig zu schwächen, ist die Aufnahmenut 68 in ihrem Eckenbereich durch eine Schrägfläche 82 verkleinert. Das Tragteil 42 weist in seinem der Schneidkante 38b gegenüberliegenden Kantenbereich eine Schrägfläche 84 auf. Es ist vorteilhaft, die Schrägflächen 82, 84 so auszubilden, dass im an den Anlageflächen 74, 76 anliegenden Montagezustand zwischen den Schrägflächen 82, 84 ein kleiner Abstand vorhanden ist. Beim Ausführungsbeispiel beträgt der Neigungswinkel des Durchgangslochs 50 und des Gewindesacklochs 60 etwa 30 bis 60°, insbesondere etwa 35 bis 45°, wobei die Schrägflächen 82, 84 an diese Neigung angepasst sind.

Das z. B. flacher als das Tragteil 42 des Werkzeugkörpers 64 ausgebildete Tragteil 42 des Werkzeugkörpers 66 - Fig. 14 - sitzt ebenfalls in einer Aufnahmenut 86, die zur Oberseite und zur Drehrichtung 36 des Rotorarms 22a hin offen ist.

Beim Ausführungsbeispiel - siehe Fig. 9 bis 16 - weisen die Werkzeugkörper 64, 66 die stumpfwinklig abgeschrägten Stirnseiten 98 auf. Der stumpfe Winkel W3, den die Stirnflächen 98 mit den Anlageflächen 76 einschließen, ist durch die Größe der Krümmung der Vorderseite des Rotorarms 22a bestimmt und beträgt beim Ausführungsbeispiel etwa 93°.

Die Werkzeugkörper 64, 66 weisen Hartmaterialelemente 44 an ihrer Unterseite und an ihrer der Drehrichtung 36 zugewandten Vorderseite auf.

Auch bei diesen Ausführungsbeispielen sind mehrere Hartmaterialelemente 44 in der Längsrichtung des Rotorarms 22a nebeneinander angeordnet sein, wobei die Werkzeugabschnitte 28c1, 28d1 sich über mehrere, z. B. drei, nebeneinander angeordnete Hartmaterialelemente 44 erstrecken können.

Bei allen Ausführungsbeispielen kann das Hartmetall durch Tantalith oder Wolframkarbide gebildet sein.

Bei den Ausführungsbeispielen sind die Werkzeugkörper 64, 66, die das Tragteil 42 von hinten, d. h. von der bezüglich der Zerkleinerungszone abgewandten Seite her bzw. von der dem Sieb 18 und/oder der Drehrichtung 36 abgewandten Seite her, mit dem Rotorarm 22a verschraubt, siehe Fig. 6 und 9, wobei der Schraubenkopf in eine Locherweiterung versenkt sein kann. Hierdurch ergeben sich mehrere Vorteile. Zum einen befinden sich die Schraubenköpfe nicht im eigentlichen Arbeitsbereich der Zerkleinerungs-Werkzeuge, wodurch die Schraubenköpfe weniger beansprucht und verschlissen werden. Außerdem bedarf es keiner Versenkung der Schraubenköpfe in den Hartmaterialelementen, wodurch nicht nur der betreffende Einarbeitungsaufwand entfällt, sondern diese Elemente auch weniger geschwächt werden.

Da die Einarbeitung eines Gewindes in ein Hartmaterialteil 44 aufwendig und schwierig ist, ist es bei allen Ausführungsbeispielen möglich und vorteilhaft, die Gewindelöcher 60 in den Hartmetallteilen 44 und Werkzeugkörper 64, 66 durch Sintern zu bilden, was gemeinsam mit dem Hartmaterialelement 44 in einem Sintervorgang erfolgen kann.

Die quaderförmige Form der Hartmaterialelemente 44, insbesondere in dem angegebenen Abmessungsverhältnis a : b : c, ermöglicht es außerdem, bei Verwendung nur einer Art oder gleicher Hartmaterialelemente 44 unterschiedliche große Flächen am jeweiligen Träger der Hartmaterialelemente 44 zu belegen. Dabei ist es auch möglich, die jeweilige Tragfläche so an die Abmessungen a, b der Hartmaterialelemente 44 anzupassen, dass die Tragfläche bzw. der Träger den Rändern der belegten Fläche und somit auch mit den Rändern der belegten plattenförmigen Hartmaterialelemente 44 abschließt.

Beim Ausführungsbeispiel nach Fig. 6 und 7 beträgt die in die Drehrichtung 36 gerichtete Abmessung 42b des Tragteils 42 die Summe der Abmessungen a und b. Die Höhe 42a des Tragteils 42 entspricht der Summe aus den Plattenabmessungen a und b abzüglich der Plattendicke c. Wie Fig. 6 zeigt, ergibt sich dabei nicht nur eine Überdeckung der betreffenden Tragflächen des Tragteils 42, sondern auch einer Plattenschicht, hier der unteren Plattenschicht, wobei das überdeckende Hartmaterialelement 44 die Schneidkante 28b bildet und von dem benachbarten Hartmaterialelement 44 gestützt wird. Die Länge L des Werkzeugs 28b bzw. Werkzeugabschnitts 28b1 beträgt ein Mehrfaches der Länge a oder der Breite b des Hartmaterialelements 44, wobei die in zwei oder mehr Reihen angeordneten Hartmaterialelemente 44 um 90° verdreht angeordnet sein können.

Das gleiche Bemessungs- und Anordnungsprinzip lässt sich auch bei den mit Hartmaterialelementen 44 aufweisenden Werkzeugkörper 64, 66 gemäß Fig. 11 bis 16 verwirklichen, bei denen die Tragteilabmessungen 42a, 42b ebenfalls ein Mehrfaches der Dicke c beträgt des Hartmaterialelements 44, wobei sich die Tragflächen am Träger und die durch die Hartmaterialelemente 44 gebildeten Belegungsflächen einander decken.

### BEZUGSZEICHENLISTE

- 10: Vorrichtung
- 12: Aufnahmeraum
- 14: Zerkleinerungsbehälter
- 16: Umfangswand
- 18: Sieb
- 18a: Siebkörper
- 20a: Zerkleinerungs-Werkzeug
- 20b: Zerkleinerungs-Werkzeug
- 22: Rotor
- 22a: Rotorarm
- 22b: horizontaler Armschenkel
- 22c: vertikaler Armschenkel
- 24: Drehachse
- 26: Welle
- 28a: Zerkleinerungs-Werkzeug
- 28b: Zerkleinerungs-Werkzeug
- 28c1: Werkzeugabschnitt
- 28d: Werkzeug
- 28d1: Werkzeugabschnitt
- 30: Siebloch
- 30a: Locherweiterung
- 32: Störleiste
- 34: Aufnahmenut
- 36: Drehrichtung
- 38a: stationäre Schneidkante
- 38b: bewegbare Schneidkante
- 40: Hülse
- 40a: Flansch
- 42: Tragteil
- 42a: Vorderseite
- 42b: Unterseite
- 44: Hartmaterialelement
- 46: Befestigungselement
- 48: Kopfschraube
- 50: Durchgangsloch
- 52: Aufnahmenut
- 54: Auflagesteg
- 56: Aufnahmenut
- 58: Stützsteg
- 60: Gewindeloch
- 62: oberer Rand
- 64: Werkzeugkörper
- 66: Werkzeugkörper
- 68: Aufnahmenut
- 70: Stützfläche
- 72: Stützfläche
- 74: Anlagefläche
- 76: Anlagefläche
- 78: Unterseite
- 80: Vorderseite
- 82: Schrägfläche
- 84: Schrägfläche
- 86: Aufnahmenut
- 98: Stirnseite
- a: Länge
- b: Breite
- c: Dicke
- L: Länge
- W1: Winkel
- W2: Winkel
- W3: Winkel

## Patentansprüche

1. Vorrichtung (10) zum Zerkleinern von Material, insbesondere zum Zerkleinern von Papierstoff-Ausgangsmaterialien, wie Altpapier, Zellstoff und dergleichen, mit einem Sieb (18) und einem damit zusammenwirkenden drehbar angeordneten Rotor (22) mit zumindest jeweils ein Tragteil (42) aufweisenden Rotorarmen (22a), die an den dem Sieb (18) und der Drehrichtung (36) zugewandten Seiten mit mehreren Hartmaterialelementen (44) versehen sind, die eine Schneidkante (38b) bilden sowie die der Drehrichtung zugewandten Hartmaterialelemente (44) materialschlüssig mit dem zugeordneten Tragteil (42) verbunden sind, das jeweils zumindest ein Befestigungselement (46) aufweist, mit dem das Tragteil (42) lösbar mit einem Rotorarm (22) verbunden ist, **dadurch gekennzeichnet, dass** das Tragteil (42) eine überwiegend rechteckförmige Querschnittsform aufweist und dass die Hartmaterialelemente (44) sowohl auf der der Drehrichtung zugewandten Seite als auch auf der dem Sieb (18) zugewandten Seite materialschlüssig mit dem Tragteil (42) verbunden sind, wobei zumindest ein Hartmaterialelement auf jeder der der Schneidkante (38b) nächstgelegenen Seite des Tragteils (42) angeordnet ist.

2. Vorrichtung nach Anspruch 1, **dadurch gekennzeichnet, dass** auf der der Drehrichtung zugewandten Seite in Richtung von der Schneidkante (38b) weg und auf der dem Sieb (18) zugewandten Seite in Richtung parallel zur Schneidkante (38b) mehrere Hartmaterialelemente (44), insbesondere unmittelbar nebeneinander, angeordnet sind.

3. Vorrichtung nach Anspruch 1 oder 2, **dadurch gekennzeichnet, dass** auf der dem Sieb (18) zugewandten Seite mehrere Hartmaterialelemente (44) in Richtung von der Schneidkante weg, insbesondere unmittelbar nebeneinander, angeordnet sind.

4. Vorrichtung nach einem der vorangehenden Ansprüche, **dadurch gekennzeichnet, dass** auf der der Drehrichtung (36) zugewandten Seite und auf der dem Sieb (18) zugewandten Seite des Rotorarms (22a) gleiche Hartmaterialelemente (44) angeordnet sind.

5. Vorrichtung nach einem der vorangehenden Ansprüche, **dadurch gekennzeichnet, dass** die Hartmaterialelemente (44) als quaderförmige Platten ausgebildet sind.

6. Vorrichtung nach einem der vorangehenden Ansprüche, **dadurch gekennzeichnet, dass** die Hartmaterialelemente (44) auf der der Drehrichtung (36) zugewandten Seite und/oder auf der dem Sieb (18) zugewandten Seite des Rotorarms (22a) in einer oder mehreren sich parallel zur Schneidkante (38b) erstreckenden Reihen angeordnet sind.

7. Vorrichtung nach Anspruch 6, **dadurch gekennzeichnet, dass** in der oder in den sich direkt an der Schneidkante (38b) erstreckenden Reihen die Hartmaterialelemente (44) sich mit ihrer Längserstreckung (a) parallel zur Schneidkante (38b) angeordnet sind.

8. Vorrichtung nach einem der vorangehenden Ansprüche, **dadurch gekennzeichnet, dass** die Hartmaterialelemente (44), die auf der der Drehrichtung (36) zugewandten Seite des Rotorarms (22a) angeordnet sind, die Schneidkante (38b) bilden und die Hartmaterialelemente (44), die auf der dem Sieb (18) zugewandten Seite angeordnet sind, sich mit den Hartmaterialelementen (44) überlappen, die auf der der Drehrichtung zugewandten Seite angeordnet sind.

9. Vorrichtung nach einem der vorangehenden Ansprüche, **dadurch gekennzeichnet, dass** die Hartmaterialelemente (44) aus Hartmetall oder Keramik bestehen.

10. Vorrichtung nach einem der Ansprüche 4 bis 9, **dadurch gekennzeichnet, das**s die Hartmaterialelemente (44) durch Löten oder Kleben mit dem Tragteil (42) verbunden sind.

11. Vorrichtung nach einem der vorangehenden Ansprüche, **dadurch gekennzeichnet, dass** die Rotorarme (22a) sich in der der Drehrichtung (36) entgegengesetzten Richtung gekrümmt erstrecken.

12. Vorrichtung nach einem der vorangehenden Ansprüche, **dadurch gekennzeichnet, dass** die einander zugewandten Stirnflächen (98) der Werkzeugkörper (64) mit den zugehörigen rückseitigen Anlageflächen (76) jeweils einen Winkel von größer oder gleich 90° - stumpfe Winkel (W3) - einschließen.

13. Vorrichtung nach einem der vorangehenden Ansprüche, **dadurch gekennzeichnet, dass** die Werkzeugkörper (64) mit Tragteil in einer rechteckförmigen Aufnahmenut (68) der Rotorarme (22a) sitzen, die in der Drehrichtung (36) und zum Sieb (18) hin offen ist.

14. Vorrichtung nach Anspruch 13, **dadurch gekennzeichnet, dass** die Aufnahmenut (68) in ihrem Eckenbereich eine schräge Begrenzungsfläche (82) aufweist und der zugewandte Kantenbereich des Werkzeugkörpers (64) durch eine sich im Wesentlichen parallel zur Begrenzungsfläche (82) erstreckende Schrägfläche (84) gebrochen ist.

15. Vorrichtung nach einem der vorangegangenen Ansprüche, **dadurch gekennzeichnet, dass** das Befestigungselement (46) durch ein Gewindeloch (60) gebildet ist, in das sich eine Schraube (48) erstreckt, die von einem Umfangsbereich her zugänglich ist, der sich von der dem Sieb (18) abgewandten Seite bis zum der Drehrichtung (36) abgewandten Seite erstreckt.

16. Zerkleinerungs-werkzeug für eine Vorrichtung nach einem der vorangehenden Ansprüche mit einem eine rechteckige Querschnittsform aufweisenden Tragteil (42) und zwei im Winkel, insbesondere rechten Winkel, zueinander angeordneten, eine Schneidkante (38b) bildenden Seiten, auf der jeweils Hartmaterialelemente (44) angeordnet sind.

## Claims

1. A material comminuting device (10), in particular for comminuting paper pulp starting materials such as recovered paper, woodpulp and the like, having a screen (18) and a rotatably mounted rotor (22) which cooperates therewith and has rotor arms (22a) which each exhibit at least one supporting member (42) and which are provided - on their sides facing towards said screen (18) and in the direction of rotation (36) - with several hard material elements (44) which form a cutting edge (38b), with the hard material elements (44) that face in the direction of rotation being materially connected to the associated supporting member (42) which each includes at least one fastening element (46) via which said supporting member (42) is detachably connected to a rotor arm (22a) **characterized in that** said supporting member (42) is predominantly rectangular in cross-section, and that said hard material elements (44) are materially connected to said supporting member (42) both on the side facing in the direction of rotation and on the side facing towards said screen (18), with at least one hard material element being provided on each side of said supporting member (42) which is nearest to said cutting edge (38b).

2. The device according to claim 1 **characterized in that** several hard material elements (44) are arranged, in particular directly adjacent to one another, on the side facing in the direction of rotation, where they extend in a direction leading away from said cutting edge (38b), and on the side facing towards said screen (18), where they extend in a direction parallel to said cutting edge (38b).

3. The device according to claims 1 or 2 **characterized in that** on the side facing towards said screen (18), several hard material elements (44) are arranged, in particular directly adjacent to one another, so as to extend in a direction leading away from said cutting edge.

4. The device according to anyone of the preceding claims **characterized in that** identical hard material elements (44) are provided on the side of said rotor arm (22a) facing in the direction of rotation (36) and on the side of said rotor arm (22a) facing towards said screen (18).

5. The device according to anyone of the preceding claims **characterized in that** said hard material elements (44) are formed as plates of a parallelepiped shape.

6. The device according to anyone of the preceding claims **characterized in that** on the side of said rotor arm (22a) facing in the direction of rotation (36) and/or on the side of said rotor arm (22a) facing towards said screen (18), said hard material elements (44) are arranged in one or plural rows which extend in parallel to said cutting edge (38b).

7. The device according to claim 6 **characterized in that** in said one or plural row(s) extending directly on said cutting edge (38b), said hard material elements (44) are arranged such that their longitudinal extension (a) is in parallel to said cutting edge (38b).

8. The device according to anyone of the preceding claims **characterized in that** those hard material elements (44) arranged on the side of said rotor arm (22a) which faces in the direction of rotation (36) will form said cutting edge (38b), and those hard material elements (44) arranged on the side which faces towards said screen (18) will overlap those hard material elements (44) provided on the side which faces in the direction of rotation.

9. The device according to anyone of the preceding claims **characterized in that** said hard material elements (44) are made of hard metal or ceramic.

10. The device according to anyone of claims 4 to 9 **characterized in that** said hard material elements (44) are connected to said supporting member (42) by soldering or gluing.

11. The device according to anyone of the preceding claims **characterized in that** in the direction opposite to the direction of rotation (36), said rotor arms (22a) extend in a curved manner.

12. The device according to anyone of the preceding claims **characterized in that** the mutually facing front surfaces (98) of the tool bodies (64) and the associated rear contact surfaces (76) each define an angle therebetween which is equal to or larger than 90° - i.e. obtuse angles (W3).

13. The device according to anyone of the preceding claims **characterized in that** said tool bodies (64) including said supporting member are located in a rectangular receiving groove (68) of said rotor arms (22a) which is open in the direction of rotation (36) and towards said screen (18).

14. The device according to claim 13 **characterized in that** said receiving groove (68) has an oblique limiting surface (82) in its corner portion, and the edge portion of said tool body (64) which faces there is cut off by an oblique surface (84) which extends substantially in parallel to said limiting surface (82).

15. The device according to anyone of the preceding claims **characterized in that** said fastening element (46) is constituted by a threaded hole (60) with a screw (48) extending therein which latter is accessible from a peripheral area that extends from the side facing away from said screen (18) to the side facing away from said direction of rotation (36).

16. A comminution tool for a device according to anyone of the preceding claims, including a supporting member (42) of a rectangular cross-sectional shape and two sides arranged so as to define an angle, in particular a right angle, therebetween and forming a cutting edge (38b) on which respective hard material elements (44) are arranged.

## Revendications

1. Dispositif (10) pour la fragmentation de matière, en particulier pour la fragmentation de produits de base pour le papier, tels que les vieux papiers, la cellulose et analogues, comprenant un crible (18) et un rotor (22) monté rotatif, qui coopère avec le crible et possède des bras de rotor (22a) qui présentent chacun au moins une partie porteuse (42), les parties porteuses étant munies, sur les côtés dirigés vers le crible (18) et dans le sens de la rotation (36), de plusieurs éléments (44) en matière dure qui forment une arête de coupe (38b), les éléments en matière dure (44) dirigés dans le sens de la rotation étant reliés par continuité de matière à la partie porteuse (42) correspondante, laquelle présente au moins un élément de fixation (46) au moyen duquel la partie porteuse (42) est reliée à un bras (22) du rotor de façon démontable, **caractérisé en ce que** la partie porteuse (42) présente une forme de section essentiellement rectangulaire et **en ce que** les éléments en matière dure (44) sont reliés à la partie porteuse (42) par continuité de matière aussi bien sur le côté dirigé dans le sens de la rotation que sur le côté dirigé vers le crible (18), au moins un élément en matière dure étant disposé sur chacun des côtés de la partie porteuse (42) qui sont immédiatement adjacents à l'arête de coupe (38b).

2. Dispositif selon la revendication 1, **caractérisé en ce que** plusieurs éléments en matière dure (44) sont disposés, en particulier directement l'un à côté de l'autre dans le sens qui s'éloigne de l'arête de coupe (38b) sur le côté dirigé dans le sens de la rotation et parallèlement à l'arête de coupe (38b) sur le côté dirigé vers le crible (18).

3. Dispositif selon la revendication 1 ou 2, **caractérisé en ce que**, sur le côté dirigé vers le crible (18), plusieurs éléments en matière dure (44) sont disposés, en particulier directement l'un à côté de l'autre, dans le sens qui s'éloigne de l'arête de coupe.

4. Dispositif selon une des revendications précédentes, **caractérisé en ce que** des éléments en matière dure (44) identiques sont disposés sur le côté du bras de rotor (22a) qui est dirigé dans le sens de la rotation (36) et sur le côté de ce bras qui est dirigé vers le crible (18).

5. Dispositif selon une des revendications précédentes, **caractérisé en ce que** les éléments en matière dure (44) sont constitués par des plaquettes parallélépipédiques.

6. Dispositif selon des revendications précédentes, **caractérisé en ce que** les éléments en matière dure (44) sont disposés en une ou plusieurs rangées s'étendant parallèlement à l'arête de coupe (38b) sur le côté du bras de rotor (22a) dirigé dans le sens de la rotation (36) et/ou sur son côté dirigé vers le crible (18).

7. Dispositif selon la revendication 6, **caractérisé en ce que**, dans la ou les rangées qui s'étendent directement le long de l'arête de coupe (38b), les éléments en matière dure (44) sont disposés avec leur extension longitudinale (a) parallèle à l'arête de coupe (38b).

8. Dispositif selon une des revendications précédentes, **caractérisé en ce que** les éléments en matière dure (44) qui sont disposés sur le côté du bras de rotor (22a) qui est dirigé dans le sens de la rotation (36) forment l'arête de coupe (38b) et les éléments en matière dure (44) qui sont disposés sur le côté dirigé vers le crible (18) sont à recouvrement avec les éléments en matière dure (44) qui sont disposés sur le côté dirigé dans le sens de la rotation.

9. Dispositif selon une des revendications précédentes, **caractérisé en ce que** les éléments en matière dure (44) sont faits de métal dur ou de céramique.

10. Dispositif selon une des revendications 4 à 9, **caractérisé en ce que** les éléments en matière dure (44) sont fixés à la partie porteuse (42) par brasage ou collage.

11. Dispositif selon une des revendications précédentes, **caractérisé en ce que** les bras de rotor (22a) sont incurvés dans la direction opposée au sens de rotation (36).

12. Dispositif selon une des revendications précédentes, **caractérisé en ce que** les surfaces frontales (98) des corps d'outils (64) qui sont dirigées l'une vers l'autre forment un angle supérieur ou égal à 90° - un angle obtus (W3) - avec leurs surfaces d'appui arrière (76).

13. Dispositif selon une des revendications précédentes, **caractérisé en ce que** les corps d'outils (64) comportant une partie porteuse sont logés dans une rainure de logement rectangulaire (68) des bras de rotor (22a) qui s'ouvre dans le sens de la rotation (36) et vers le crible (18).

14. Dispositif selon la revendication 13, **caractérisé en ce que** la rainure de logement (68) présente une surface limite oblique (82) dans sa région d'angle et la région d'arête du corps d'outil (64) dirigée vers la rainure est abattue par une surface oblique (84) qui s'étend sensiblement parallèlement à la surface limite (82).

15. Dispositif selon une des revendications précédentes, **caractérisé en ce que** l'élément de fixation (46) est constitué par un trou fileté (60) dans lequel s'étend une vis (48) qui est accessible à partir d'une région périphérique qui s'étend du côté éloigné du crible (18) au côté éloigné du sens de la rotation (36).

16. Outil de fragmentation pour un dispositif selon une des revendications précédentes, comprenant une partie porteuse (42) présentant une forme de section rectangulaire et possédant deux côtés qui enferment entre eux un angle, en particulier un angle droit, et qui forment une arête de coupe (38b) sur laquelle sont disposés des éléments en matière dure (44).
